# EUROPEAN PATENT SPECIFICATION

(11) **EP 3 907 417 B1**
(45) Date of publication and mention of the grant of the patent: **23.10.2024**
(21) Application number: 20172768.2
(22) Date of filing: 04.05.2020
(51) Int. Cl.: F16F 9/14

(54) **A DASHPOT FOR DAMPING A CLOSING MOVEMENT OF A HINGED CLOSURE MEMBER**
SCHLIESSDÄMPFER ZUR DÄMPFUNG EINER SCHLIESSBEWEGUNG EINES SCHARNIERVERSCHLUSSSYSTEMS
AMORTISSEUR POUR AMORTIR UN MOUVEMENT DE FERMETURE D'UN ÉLÉMENT DE FERMETURE À CHARNIÈRE

(43) Date of publication of application: 10.11.2021
(73) Proprietor: Locinox, 8790 Waregem (BE)
(72) Inventor: TALPE, Joseph, 8551 Heestert-Zwevegem (BE)
(74) Representative: Gevers Patents

(56) References cited:
- EP-A1- 2 295 693
- EP-A1- 3 067 499
- WO-A1-2010/054867
- WO-A1-2018/121890
- WO-A1-2018/228729

## Description

The present invention relates to a dashpot for damping a closing movement of a closure system having a support and a closure member that are hingedly connected to each other.

The dashpot comprises a metal cylinder barrel having a longitudinal direction and a closed cylinder cavity which is formed within the cylinder barrel and which is filled with a volume of hydraulic fluid, the cylinder cavity being formed partially by a cylindrical wall portion of the cylinder barrel. The dashpot further comprises a piston within said cylinder barrel so as to divide the closed cylinder cavity into a high pressure compartment and a low pressure compartment, the piston being slideable with respect to the cylinder barrel between two extreme positions in said longitudinal direction and the cylindrical wall portion having an inner sliding area along which the piston slides when moving between its two extreme positions. A damper shaft is rotatably mounted on the cylinder barrel and is operatively coupled to the piston. The dashpot additionally comprises a motion converting mechanism for converting a rotational motion of the damper shaft in a sliding motion of the piston and a one-way valve allowing fluid flow from the low pressure compartment to the high pressure compartment when said closure member is being opened. At least one restricted fluid passage is provided between the high pressure compartment and the low pressure compartment, the restricted fluid passage being formed by a clearance between said sliding area and a circumferential part of the piston, said clearance having, at a predetermined temperature, a predetermined narrowest cross sectional area to determine a closing speed of the closure member. The dashpot further comprises a temperature compensation system comprising a first part and a second part which cooperate with one another to form said restricted fluid passage, the first part being made of a first material having a first thermal expansion coefficient and the second part being made of a second material having a second thermal expansion coefficient, the second thermal expansion coefficient being larger than the first thermal expansion coefficient so that said predetermined narrowest cross sectional area is decreased when said temperature is raised and vice versa so that said predetermined narrowest cross sectional area is increased when said temperature is lowered. The first part of the temperature compensation mechanism is formed by the cylindrical wall portion and the second part of the temperature compensation mechanism is formed by the piston.

The dashpot may be included in a hinge or may be part of an actuator which comprises a spring for automatically closing the closure system after the closure member has been opened. The dashpot is in particular intended for outdoor use. The temperature compensation system ensures a substantially constant closing speed within a certain range of temperatures.

A dashpot having the above described features is disclosed in EP 3 067 499. This known dashpot is used in an actuator that is separately attached to the closure system. The dashpot has a cylinder barrel and a piston. A first restricted fluid passage connecting the high pressure compartment with the low pressure compartment is formed in the cylinder barrel. This first restricted fluid passage comprises an adjustable valve for adjusting the cross sectional area thereof, i.e. for adjusting the closing speed of the closure member. A second restricted fluid passage is formed between the piston and the cylinder barrel. The piston has a somewhat smaller outer diameter than the inner diameter of the cylinder barrel so that there is a clearance between the piston and the cylinder barrel. This clearance forms the second restricted fluid passage between the high pressure compartment and the low pressure compartment of the cylinder cavity. The cylinder barrel is made of aluminium and the piston is made of polyoxymethylene which has a higher thermal expansion coefficient than aluminium. The difference in thermal expansion causes the cross sectional area of the clearance between the piston and the cylinder barrel (i.e. of the second restricted fluid passage) to decrease with increasing temperature and vice versa. This automatic temperature variation of the clearance between the piston and the cylinder barrel compensates for the viscosity changes in the hydraulic fluid, while not affecting hydraulic fluid flow through the first restricted fluid passage that is used to manually adjust the closing speed of the dashpot.

Polyoxymethylene was found to be the most appropriate polymeric material for the piston. It has a high strength, hardness and rigidity and is therefore widely used for producing injection-moulded high-performance engineering components such as small gear wheels, etc. In the dashpot disclosed in EP 3 067 499, the use of polyoxymethylene has however the disadvantage that its thermal expansion coefficient is so high that,, as from a temperature of between 30 and 45°C, there is no longer a clearance between the piston and the cylinder barrel so that, as from a certain temperature, the piston may get stuck in the cylinder barrel.

This is a particular problem for outdoor applications where the temperature of the dashpot may vary within wider limits, in particular within a range of from below -30°C to even up to 70°C. The difference between the thermal expansion coefficients of aluminium (and other metals) and polyoxymethylene (and most other polymeric materials including polyamide) is so large that an appropriate temperature compensation cannot be achieved over this whole range, which range spans about 100°C.

An object of the present invention is to provide a dashpot wherein the temperature compensation mechanism is operative over a wider range of temperatures than the dashpot disclosed in EP 3 067 499.

To this end, the dashpot according to the present invention is characterised in that the piston comprises a base and an outer cover layer, the base being made of a glass fibre reinforced polymeric material, the outer cover layer forming said circumferential part of the piston and being made of a polymeric material which is less abrasive towards said metal than said glass fibre reinforced polymeric material is towards said metal.

The presence of the glass fibres in the polymeric material has two effects. First of all glass has a thermal expansion coefficient, in particular a linear thermal expansion coefficient, which is much smaller than the thermal expansion coefficient of polymeric materials, and even of aluminium. By the presence of the glass fibres in the glass fibre reinforced polymeric material of the piston, the thermal expansion coefficient thereof is smaller than the thermal expansion coefficient of the polymeric material itself. When using the glass fibre reinforced polymeric material for producing the piston or at least a part thereof, the amount of fibres can be adjusted as a function of the thermal expansion of the piston required to achieve the temperature compensation over the required temperature range, in particular over a temperature range of -30°C to 70°C. Additionally, the presence of the glass fibres increases the strength, in particular the tensile strength, of the polymeric material and also the wear resistance.

The present inventor has found that the glass fibre reinforced polymeric material is quite abrasive, in particular towards metal, e.g. aluminium, alloys. In order to reduce the wear and abrasion of the sliding area of the cylindrical wall portion of the cylinder barrel, the circumferential part of the piston (i.e. the outer cover layer) which slides against the cylinder barrel is not made of the glass fibre reinforced polymeric material but is instead made of a polymeric material which is less abrasive than the glass fibre reinforced polymeric material.

A further advantage of making the outer cover layer of such a polymeric material is that the circumference of the piston can be machined more easily and more accurately with less wear of the tooling equipment. An accurate machining of the circumference of the piston is advantageous to be able to obtain the required width of the clearance between the piston and the sliding area of the cylinder barrel.

In an embodiment of the dashpot according to the present invention, said hydraulic fluid comprises silicone oil.

An advantage of silicone oil is that its viscosity varies only a little as a function of the temperature.

In an embodiment of the dashpot according to the invention, the polymeric material used for the glass fibre reinforced polymeric material is selected from the group consisting of polyoxymethylene and polyamide with polyoxymethylene being the preferred choice.

These two polymeric materials are especially suited to make mechanical parts having good mechanical properties, also at more elevated temperatures. They have a good flexural and tensile strength and a good stiffness and hardness. Compared to polyamide, polyoxymethylene has the advantage that it absorbs less water. When the hydraulic fluid contains some moisture, which is especially the case when the hydraulic fluid comprises a silicone oil, the use of polyoxymethylene as polymeric material for the piston is to be preferred.

In an embodiment of the dashpot according to the present invention, the polymeric material of the outer cover layer is non-abrasive and/or is free of hard fibres which have in particular a Mohs hardness higher than 4.0.

Such materials further reduce the risk of damaging the cylinder barrel of the dashpot due to the sliding motion of the piston.

In an embodiment of the present invention, the base of the piston consists solely of said glass fibre reinforced polymeric material, preferably glass fibre reinforced polyoxymethylene and/or said outer cover layer of the piston consists solely of said polymeric material, preferably polyoxymethylene.

Forming the piston as a whole from only two materials allows to more accurately model the temperature expansion behaviour when compared to including more different structures and/or materials.

In an embodiment of the dashpot according to the present invention, the outer cover layer is overmoulded over the base. Preferably, a mechanical anchoring, in particular a dovetail joint and/or a tongue-and-groove mechanism, is provided to anchor the outer cover layer to the base.

By moulding the polymeric material of the circumferential part of the piston over the part of the piston which is made of the glass fibre reinforce polymeric material, the outer cover layer can be easily produced and fits exactly to the remaining part of the piston. It is also advantageous to provide a mechanical anchoring of the outer cover layer to the base as this reduces the risk that the outer cover layer becomes detached (e.g. due to a different thermal expansion behaviour between the base and the outer cover layer) from the base. A dovetail joint and/or a tongue-and-groove mechanism are advantageous as such a form-fitting shape does not require any external means (e.g. transversely positioned bolts or pins) to ensure the anchoring.

In an embodiment of the dashpot according to the present invention, said damper shaft extends through the piston from said high pressure compartment to said low pressure compartment and a further restricted fluid passage between the high pressure compartment and the low pressure compartment is provided in said damper shaft, which further restricted fluid passage comprises an adjustable valve.

The adjustable valve enables to adjust the closing speed of the closure member. Moreover, it enables to adjust the cross sectional area of the further restricted fluid passage depending on the cross sectional area of the restricted fluid passage formed by the clearance between the piston and the cylinder barrel. Such adjustments may be done to compensate for manufacturing tolerances. The inner diameter of the cylinder barrel and the outer diameter of the piston are indeed produced with a predetermined tolerance, in particular by a machining step such as a milling step.

In an embodiment of the dashpot according to the present invention, said damper shaft is made of a metal, in particular of an aluminium alloy.

A metal damper shaft is preferred to a damper shaft made of a polymeric material. Whilst the required strength in as compact a damper shaft as possible (i.e. a damper shaft with as small a radius as possible) is achievable using both a metal or a polymeric material, the metal option is often cheaper.

In an embodiment of the present invention, the outer cover layer has an average width of between 1 % to 10%, particularly between 3% and 6% and more particularly between 4% and 5% of the diameter of the piston and/or the outer cover layer has an average width of between 0,5 mm and 6 mm, particularly between 1 mm and 4,5 mm and more particularly between 1,2 mm and 3,5 mm.

By having such an upper limit, the difference in thermal expansion behaviour between the outer cover layer and the base has a minimal effect on the overall thermal expansion behaviour of the piston. Furthermore, the lower limit ensures that the outer cover layer has a sufficient rigidity by itself in case this layer should become (partly) detached from the base of the piston.

It will be readily appreciated that the various embodiments described above, although referred to as "preferred", are to be construed as exemplary manners in which the invention may be implemented rather than as limiting the scope of the invention. Moreover, these various embodiments may be readily combined with one another.

The invention will be further explained by means of the following description and the appended figures. The invention will be further explained by means of the following description and the appended figures.
Figure 1 shows a hydraulically damped actuator with a dashpot according to the present invention mounted on a right-handed closure system.
Figure 2 shows a longitudinal cross-section through the hydraulically damped actuator of figure 1.
Figure 3 shows a detail of figure 2.

The present invention will be described with respect to particular embodiments and with reference to certain drawings but the invention is not limited thereto but only by the claims. Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes. The terms so used are interchangeable under appropriate circumstances and the embodiments of the invention described herein can operate in other orientations than described or illustrated herein.

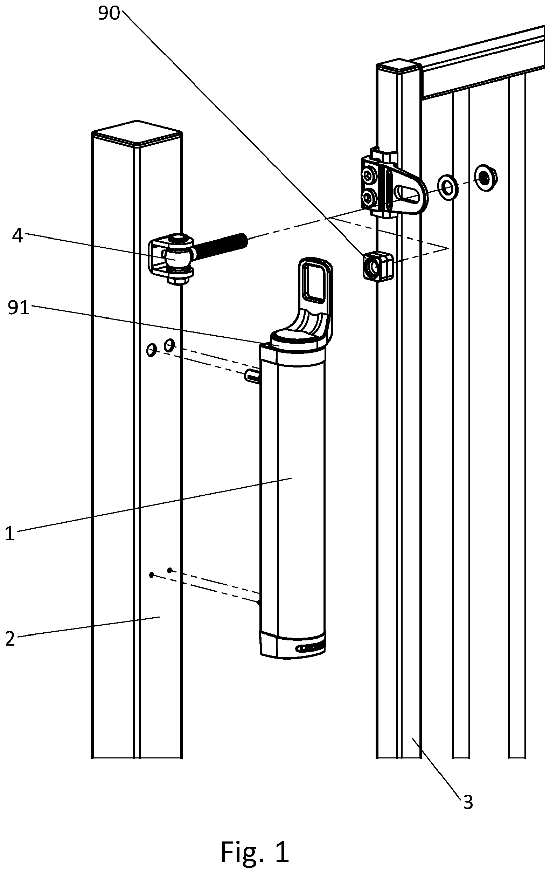

The invention generally relates to a dashpot for damping a closing movement of a closure system having a support and a closure member that are hingedly connected to each other. The dashpot will largely be described by reference to a hydraulically damped actuator as illustrated in figures 1 to 3, but the dashpot should not be considered to be limited to applications within an actuator. In particular, applications of the dashpot in a hinge are also considered within the scope of the invention.

The actuator 1 is designed to be used in a closure system having first member and a second member that are hingedly attached to one another, in particular by means of an eyebolt hinge 4. The first member is typically a fixed support 2, such as a wall or a post, while the second member is typically a moveable closure member 3, such as a gate, a door, or a window. An opening/closing movement of the closure member 3 with respect to the support 2 is transferred, via the eyebolt hinge 4, to a nut-element 90 positioned within a mechanical connector 91 positioned on top of the actuator 1.

In a typical application, it is desired to have the closure member 3 to be self-closing. This may be achieved generally by providing an actuator that comprises an energy storing mechanism and a dashpot both of which are operatively connected with the members of the closure system. Naturally, the energy storing mechanism and the dashpot may be provided in different physical entities (e.g. a dashpot in a top hinge and the energy storing mechanism in a bottom hinge) that are separately attached to the same closure system. The energy storing mechanism is configured for storing energy when the closure system is being opened and for restoring the energy to effect closure of the closure system. The dashpot is configured for damping a closing movement of the closure system and comprises a piston that is slideable along the longitudinal direction within the actuator between two extreme positions.

The actuator 1 is of the same kind as the second embodiment actuator described in WO 2018/121890 such that details on how to mount the actuator 1 to the closure system is disclosed by Figures 8 to 10C of WO 2018/121890 and the accompanying description. When mounted to the closure system, the tubular cylinder barrel 17 of the actuator 1 remains stationary while the damper shaft 24 rotates around its longitudinal axis 18 to transfer the opening and closing motion of the closure member to the dashpot. However, in different embodiments, it will be readily appreciated that the cylinder barrel ay rotate with respect to a stationary damper shaft and/or that both of these may rotate. Furthermore, the dashpot according to the present invention may also be used in an actuator according to other embodiments disclosed in WO 2018/121890.

The actuator 1 may be used for both orientations of closure systems as the actuator 1 may be mounted in a differently oriented position depending on the handedness of the closure system. Specifically, for a right-handed closure system, the actuator is mounted with its longitudinal axis 18 in a first orientation (e.g. upright or upside down), while, for a left-handed closure system, the actuator is mounted with its longitudinal axis in a second orientation that opposite to the first orientation (e.g. upside down or upright). This enables the energy storing mechanism and the dashpot to operate in the same way for both a right-handed closure system and a left-handed closure system.

The actuator 1 comprises a shaft 24 that extends along the length of the tubular cylinder barrel 17 and has a rotation axis that substantially coincides with the longitudinal axis 18 of the cylinder barrel 17. The shaft 24 has a first extremity 25 that is connected to the mechanical connector 91. The shaft 24 also has a second extremity 26 which is preferably accessible when the actuator 1 is mounted to the closure system. The shaft 24 transfers the opening and closing movement of the closure system to the dashpot (and also to the energy storing mechanism) and is therefore also referred to as the damper shaft 24.

The actuator 1 is provided with a torsion spring 79 that is interposed between the cylinder barrel 17 and the damper shaft 24. The torsion spring 79 has a first extremity 92 that is fixed with respect to the cylinder barrel 17. The second extremity (not shown) of the torsion spring 79 is fixed with respect to the damper shaft 24. Padding 82 is provided to prevent the torsion spring 79 from buckling due to the large forces exerted thereon. This torsion spring 79 urges the closure member 3 to its closed position.

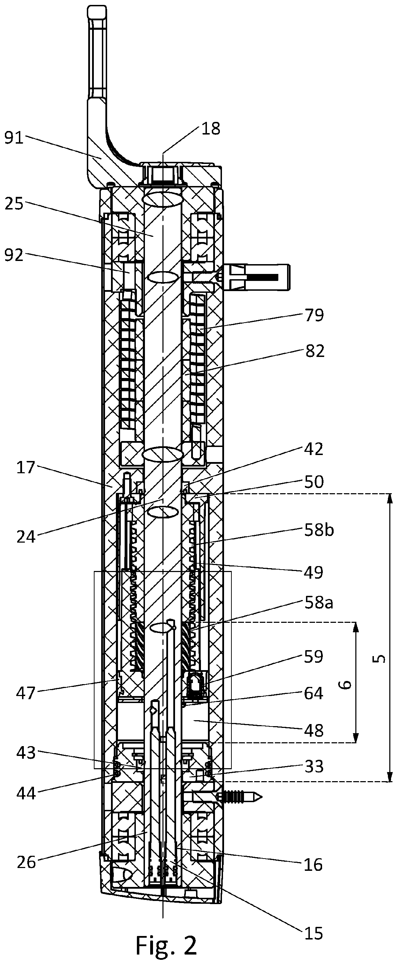

The dashpot comprises a closed cylinder cavity formed inside the cylinder barrel 17. More specifically, the cylinder cavity is partially formed by a cylindrical wall portion indicated by reference number 5 in figure 2. The closed cylinder cavity is closed by various seals at its top and bottom regions (i.e. its end regions). Specifically, at the first end of the cylinder barrel 17 a first annular seal 42 is disposed around the damper shaft 24 and engages the inner wall of the cylinder barrel 17. This annular seal 42 prevents leakage of hydraulic fluid that could occur due to the relative rotation of the damper shaft 24 with respect to the cylinder barrel 17. At the second end of the cylinder barrel, the cylinder cavity is closed by the seal cap 33. A second annular seal 43 is disposed around the damper shaft 24 and engages an inner wall of the seal cap 33. This annular seal 43 prevents leakage of hydraulic fluid that could occur due to the relative rotation of the damper shaft 24 with respect to the seal cap 33. In order for the seal cap 33 to be effectively sealed with respect to the cylinder barrel 17, two sealing rings 44 are provided on an outer wall of the seal cap 33.

The closed cylinder cavity is filled with hydraulic fluid. Preferably the hydraulic fluid comprises silicone oil which is advantageous as its viscosity varies only a little as a function of temperature.

The dashpot further comprises a piston 47 placed in the closed cylinder cavity to divide the closed cylinder cavity into a high pressure compartment 48 and a low pressure compartment 49. The dashpot further comprises a motion converting mechanism to convert the relative rotation between the cylinder barrel 17 and said damper shaft 24 into a sliding motion of the piston 47 between two extreme positions. During its sliding motion, the piston 47 slides along the cylinder barrel 17, in particular along (part of) the cylindrical wall portion 5. As used herein, the term "sliding area" is meant to include at least the surface area of the inner wall of the cylinder barrel 17 along which the piston 47 is able to slide. The sliding area is denoted with reference number 6 in figure 2.

The motion converting mechanism comprises a locking element 50 that prevents rotation of the piston 47 with respect to the cylinder barrel 17 and two mutually co-operating screw threads 58a, 58b. Further details of the motion converting mechanism are described in WO 2018/121890 filed by the Applicant.

The dashpot further comprises a one-way valve 59 which allows the hydraulic fluid to flow from the low pressure compartment 49 of the closed cylinder cavity to the high pressure compartment 48 thereof when the closure system is being opened. The opening movement of the closure system is therefore not damped or at least to a smaller extent than the closing movement. This one-way valve 59 is typically provided in the piston 47, in particular in a fluid passage through the piston 47. In the illustrated embodiment, the one-way valve 59 is formed by a spring-biased ball valve.

The piston 47 is also provided with a further one-way valve (not shown), namely a safety valve, which enables flow of hydraulic fluid in the opposite direction (i.e. from the high pressure compartment 48 to the low pressure compartment 49) but only in case the pressure in the high pressure compartment 48 of the cylinder cavity would exceed a predetermined threshold value, for example when an external closing force would be exerted onto the closure member 3 which could damage the actuator 1. The spring provided in this safety valve has thus a much larger spring constant than the spring provided in the one-way valve 59 as the safety valve should not be opened under normal operating conditions. This one-way valve is typically provided in the piston 47, in particular in a fluid passage through the piston 47. As shown in figures 2 to 3, one or more mounting plates 63 are attached to the bottom of the piston 47. These plates 63 may be attached by means of one or more screws 64 that fit into corresponding holes (not shown) in the piston 47. The mounting plates 63 are used to mount the one-way valve(s) in the piston 47.

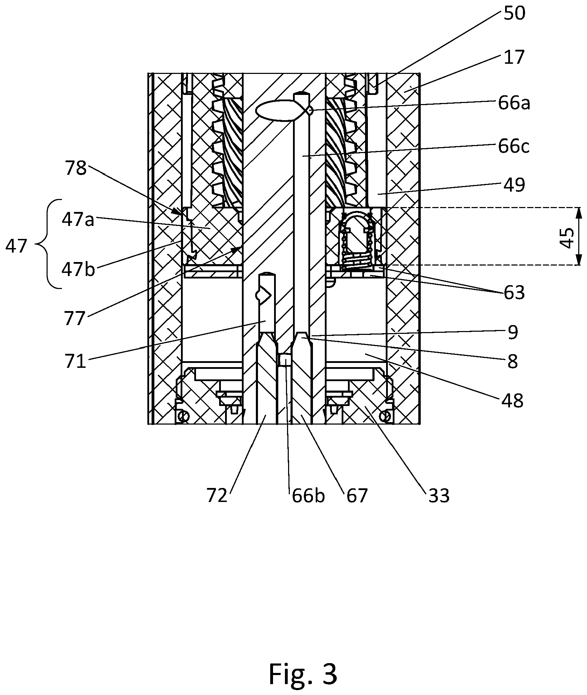

To achieve the damping action upon closing of the closure system, a restricted fluid passage is provided between the compartments 48, 49 of the closed cylinder cavity. In the illustrated embodiment, the restricted fluid passage is formed by a plurality passages that connect the high pressure compartment 48 to the low pressure compartment 49 in any position of the piston 47. More specifically, a fluid passage 66 is provided in the damper shaft 24 as best illustrated in figure 3. Passage 66 is formed by two transverse bores 66a, 66b connected by an axial bore 66c. Another fluid passage is formed by a clearance 78 between a circumferential part of the piston 47 and the cylinder barrel 17. Yet another fluid passage is formed by a clearance 77 between the damper shaft 24 and an inner are of the piston 47. The closing speed of the closure member 3 is determined by the sum of all narrowest cross-sectional areas of each passage 66, 77, 78.

In the illustrated embodiment, an adjustable valve 67, in particular a needle valve, is placed in the axial bore 66c. The narrowest cross-section within this fluid passage 66 is formed between the top part of the adjustable valve 67, i.e. the tapered nose section 8, and the bore 66c which forms a valve seat 9 as illustrated in figure 2C. The end 15 of the adjustable valve opposite the tapered nose section 8 is screwed into the extension of the bore 66c using a threaded portion 16. The top face of the end 15 is accessible from outside the dashpot. As such, the valve 67 may be rotated when the actuator 1 is mounted, which rotation causes the top of the valve 67 to move upwards or downwards thereby changing the narrowest cross-section within the fluid passage 66, i.e. adjusting the closing speed of the closure member 3. It will be readily appreciated that the actuator 1 may also be provided without an adjustable valve 67 in which case the closing speed of the closure member 3 is fixed. For example, the needle valve 67 may be wholly fixed within the damper shaft 24 without allowing a rotation to change the narrowest cross-section.

In the actuator 1 another fluid passage 71 (optionally with a second, preferably adjustable, valve 72) is provided between the compartments 48, 49 of the closed cylinder cavity as described in WO 2018/228729. This second fluid passage 71 forms a by-pass which causes an increase of the closing speed at the end of the closing movement, i.e. a final snap, to ensure that the closure system is reliably closed.

The actuator 1 is mainly used outdoors where large temperature variations are not uncommon. For example, summer temperatures up to 70°C when the hinge 1 is exposed to sunlight and winter temperatures below -30°C are not uncommon, i.e. temperature variations up to and possibly even exceeding 100°C are possible. Moreover, there are also daily temperature variations between night and day which can easily exceed 30°C when the hinge 1 is subjected to direct sunshine. These temperature variations cause expansion, and also contraction, of the hydraulic fluid, which could affect the operation of the dashpot. In particular, the expansion due to temperature variations can be up to 1% of the volume of hydraulic fluid for a temperature variation of 10°C, depending on the expansion coefficient of the hydraulic fluid. As such, an expansion of, for example, up to 3 ml for a temperature difference of 50°C is possible.

To counter this expansion, a small amount of gas such as air could be provided in the hydraulic fluid itself. However, it has been found that this gas may interfere with the good working of the hinge 1, especially when gas bubbles, or an emulsion of the gas in the hydraulic fluid, passes through the restricted flow passage(s) and provides a smaller damping effect than pure hydraulic fluid. Consequently, the hydraulic fluid is preferably free of gas bubbles. In the actuator 1 illustrated in the drawings, expansion of the hydraulic fluid is countered by means of an expansion channel (not shown). Further details of the expansion channel are described in WO 2018/121890 filed by the Applicant.

Temperature changes also affect the viscosity of the hydraulic fluid in such a way that the damping force increases as temperature increases. This is a particular problem for outdoor applications where the hinge may be subject to large temperature variations. It is thus necessary to include a temperature compensation mechanism in order to counter changes in hydraulic fluid viscosity.

This is achieved by relying on the concept described in EP 3 067 499. More specifically, the temperature compensation mechanism relies on a clearance 78 between the piston 47, in particular the circumferential part 45 (indicated on figure 3) thereof, and the cylindrical wall portion 5, in particular the sliding area 6, of the cylinder barrel 17. This is advantageous as the temperature compensation mechanism thus does not affect the functioning of the adjustable valve 67.

The piston 47 is made of glass fibre reinforced polymeric material, preferably polyoxymethylene. As described above, the use of glass fibres reduces the thermal expansion of the piston 47. In this way, the range of temperatures in which the dashpot may operate is increased when compared to the dashpot described in EP 3 067 499. It has been found that using 30% glass fibres yields the desired thermal expansion of the piston 147 such that, in combination with an aluminium cylinder barrel 17, the temperature compensation operates in the desired temperature range of -30°C to 70°C. However, depending on the metal used for the cylinder barrel 17 and the shape of the piston 47, other percentage of glass fibres may be used, e.g. between 10% and 50% and preferably between 20% and 40% by volume of fibres.

A downside of forming the piston 47 from a glass fibre reinforced polymeric material is that the cylinder barrel 17, in particular the sliding area 6 of the cylindrical wall portion 5, may be damaged due to the glass fibres present in the material from which the piston 47 is formed. In order to prevent such damage, at least the circumferential part 45 of the piston 47, which is the part that slides along the sliding area 6, is made from a different material than the remainder of the piston 47, which different material is less abrasive towards the cylinder barrel 17.

According to the invention, this is achieved in that the piston 47 comprises a base 47a and an outer cover layer 47b that forms at least the circumferential part 45 of the piston 47. The base 47a is made from a glass fibre reinforced polymeric material, while the outer cover layer 47b is made from a material which does not (or at least less severely) damage the sliding area 6 of the cylindrical wall portion 5. Suitable materials for the outer cover layer 47b are a further polymeric material, in particular polyoxymethylene, which is less abrasive than said glass fibre reinforced polymeric material and which is in particular non-abrasive. The further polymeric material layer is preferably free of hard fibres which have in particular a Mohs hardness higher than 4.0.

In the illustrated embodiment, the piston 47 is made by multi-material injection moulding, in particular over-moulding, such that both the base 47a and the cover layer 47b may be formed within a single process. As illustrated in figure 3, there is also a mechanical anchoring between the base 47a and the cover layer 47b by using a tooth and groove connection. Alternatively and/or additionally, the mechanical anchoring may be obtained by a dovetail joint. In this manufacturing method, it is preferred that the cover layer 47b is formed from polyoxymethylene in order to be compatible with the polyoxymethylene of the base layer 47a and as this absorbs less water when compared to polyamide which is beneficial since the hydraulic fluid is preferably silicone oil which comprises some moisture.

In the illustrated embodiment, the outer cover layer 47b has an average thickness that is about 4,5% of the diameter of the entire piston 47. In general, the outer cover layer 47b has an average thickness of between 1 % to 10%, particularly between 3% and 6% and more particularly between 4% and 5% of the diameter of the entire piston 47. In the illustrated embodiment, the outer cover layer 47b has an average thickness of between 0,5 mm and 6 mm, particularly between 1 mm and 4,5 mm and more particularly between 1,2 mm and 3,5 mm. By having such an upper limit, the difference in thermal expansion behaviour between the outer cover layer 47b and the base 47a has a minimal effect on the overall thermal expansion behaviour of the piston 47 such that the temperature expansion behaviour of the piston 47 is largely determined by the base 47a. Furthermore, the lower limit ensures that the outer cover layer 47b has sufficient rigidity by itself. For example, due to the thermal expansion, it may occur that the outer cover layer 47b becomes (partly) detached from the base 47a, in which case the rigidity ensures that the outer cover layer 47b is sufficiently stable to at least largely retain its shape.

The outer cover layer 47b has an outermost surface area that slides along the sliding area 5. The average thickness of the outer cover layer 47b may be determined by dividing its volume by the an average thickness.

In the illustrated embodiments, the damper shaft 24 is made, preferably extruded, from a metal, preferably aluminium. A metal damper shaft 24 is preferred as it is economically often cheaper to obtain the required strength in a compact damper shaft using metal. Having the damper shaft 24 as compact as possible is beneficial as this leaves more volume to provide hydraulic fluid within a same outside diameter hinge. In other words, the maximal volume of the closed cylinder cavity is increased by reducing the diameter of the damper shaft 24.

Although aspects of the present disclosure have been described with respect to specific embodiments, it will be readily appreciated that these aspects may be implemented in other forms within the scope of the invention as defined by the claims.

## Claims

1. A dashpot for damping a closing movement of a closure system having a support (2) and a closure member (3) that are hingedly connected to each other, the dashpot comprising:
- a cylinder barrel (17) having a longitudinal direction (18) and being made of a metal;
- a closed cylinder cavity formed within the cylinder barrel and being filled with a volume of hydraulic fluid, the cylinder cavity being formed partially by a cylindrical wall portion (5) of the cylinder barrel;
- a piston (47) within said cylinder barrel so as to divide the closed cylinder cavity into a high pressure compartment (48) and a low pressure compartment (49), the piston being slideable with respect to the cylinder barrel between two extreme positions in said longitudinal direction, the cylindrical wall portion (5) having an inner sliding area (6) along which the piston slides when moving between its two extreme positions;
- a damper shaft (24) which is rotatably mounted on the cylinder barrel and operatively coupled to the piston;
- a motion converting mechanism for converting a rotational motion of the damper shaft in a sliding motion of the piston;
- a one-way valve (59) allowing fluid flow from the low pressure compartment to the high pressure compartment when said closure member is being opened;
- at least one restricted fluid passage between the high pressure compartment and the low pressure compartment, the restricted fluid passage being formed by a clearance (78) between said sliding area (5) and a circumferential part (45) of the piston (47), said clearance having, at a predetermined temperature, a predetermined narrowest cross sectional area to determine a closing speed of the closure member; and
- a temperature compensation system comprising a first part and a second part which cooperate with one another to form said restricted fluid passage, a first part being made of a first material having a first thermal expansion coefficient and a second part being made of a second material having a second thermal expansion coefficient, the second thermal expansion coefficient being larger than the first thermal expansion coefficient so that said cross sectional area is decreased when said temperature is raised and vice versa so that said cross sectional area is increased when said temperature is lowered, wherein the first part is formed by the cylindrical wall portion (5) and the second part is formed by the piston (47),
**characterised in that** the piston (47) comprises a base (47a) and an outer cover layer (47b), the base (47a) being made of a glass fibre reinforced polymeric material, the outer cover layer (47b) forming said circumferential part (45) and being made of a polymeric material which is less abrasive towards said metal than said glass fibre reinforced polymeric material is towards said metal.

2. The dashpot according to claim 1, **characterised in that** said base (47a) comprises glass fibre reinforced polyoxymethylene.

3. The dashpot according to claim 1 or 2, **characterised in that** said metal comprises an aluminium alloy.

4. The dashpot according to any one of the preceding claims, **characterised in that** the polymeric material of the outer cover layer (47b) is non-abrasive.

5. The dashpot according to any one of the preceding claims, **characterised in that** the polymeric material of the outer cover layer (47b) is free of hard fibres which have, in particular, a Mohs hardness higher than 4.0.

6. The dashpot according to any one of the preceding claims, **characterised in that** the outer cover layer (47b) comprises polyoxymethylene.

7. The dashpot according to any one of the preceding claims, **characterised in that** the outer cover layer (47b) is overmoulded over the base (47a).

8. The dashpot according to claim 7, **characterised in that** a mechanical anchoring is provided to anchor the outer cover layer (47b) to the base (47).

9. The dashpot according to claim 8, **characterised in that** the mechanical anchoring comprises a dovetail joint and/or a tongue-and-groove mechanism.

10. The dashpot according to any one of the preceding claims, **characterised in that** said damper shaft (24) extends through the piston from said high pressure compartment (48) to said low pressure compartment (49) and a further restricted fluid passage (66) is provided between the high pressure compartment and the low pressure compartment in said damper shaft, which further restricted fluid passage comprises an adjustable valve (67).

11. The dashpot according to any one of the preceding claims, **characterised in that** the outer cover layer (47b) has an average thickness between 1% to 10%, particularly between 3% and 6% and more particularly between 4% and 5% of the diameter of the piston (47).

12. The dashpot according to any one of the preceding claims, **characterised in that** the outer cover layer (47b) has an average thickness between 0,5 mm and 6 mm, particularly between 1 mm and 4,5 mm and more particularly between 1,2 mm and 3,5 mm.

13. The dashpot according to any one of the preceding claims, **characterised in that** the base (47a) consists of said glass fibre reinforced polymeric material, preferably glass fibre reinforced polyoxymethylene.

14. The dashpot according to any one of the preceding claims, **characterised in that** the outer cover layer (47b) consists of said polymeric material, preferably polyoxymethylene.

15. The dashpot according to any one of the preceding claims, **characterised in that** the hydraulic fluid comprises silicone oil.

## Patentansprüche

1. Ein Schließdämpfer zur Dämpfung einer Schließbewegung eines Verschlusssystems mit einer Stütze (2) und einem Schließelement (3), die gelenkig miteinander verbunden sind, wobei der Schließdämpfer Folgendes umfasst:
- einen Zylindermantel (17) mit einer Längsrichtung (18) und hergestellt aus einem Metall;
- einen geschlossenen Zylinderhohlraum, geformt im Zylindermantel und gefüllt mit einer Menge von Hydraulikflüssigkeit, wobei der Zylinderhohlraum teilweise durch einen zylindrischen Wandabschnitt (5) des Zylindermantels gebildet ist;
- einen Kolben (47) innerhalb des erwähnten Zylindermantels, um den geschlossenen Zylinderhohlraum in einen Raum mit hohem Druck (48) und einen Raum mit niedrigem Druck (49) zu teilen, wobei der Kolben in Bezug zum Zylindermantel zwischen zwei Endpositionen in der erwähnten Längsrichtung verschiebbar ist, wobei der zylindrische Wandabschnitt (5) einen inneren Gleitbereich (6) hat, an dem der Kolben entlang gleitet, wenn er sich zwischen seinen zwei Endpositionen bewegt;
- eine Dämpferwelle (24), welche drehbar auf dem Zylindermantel montiert ist und operativ mit dem Kolben verbunden ist;
- einen Bewegungsumwandlungsmechanismus zum Umwandeln einer Drehbewegung der Dämpferwelle in eine Gleitbewegung des Kolbens;
- ein Einwegventil (59), welches die Fluidbewegung vom Raum mit niedrigem Druck zum Raum mit hohem Druck erlaubt, wenn das erwähnte Schließelement geöffnet wird;
- zumindest eine begrenzte Fluidpassage zwischen dem Raum mit hohem Druck und dem Raum mit niedrigem Druck, wobei die begrenzte Fluidpassage durch eine Aussparung (78) zwischen dem erwähnten Gleitbereich (5) und einem umlaufenden Teil (45) des Kolbens (47) gebildet ist, wobei die erwähnte Aussparung, bei einer vorgegebenen Temperatur, einen vorgegebenen engsten Querschnittsbereich hat, um eine Schließgeschwindigkeit des Schließelements zu bestimmen; und
- ein Temperaturausgleichssystem, welches ein erstes Teil und ein zweites Teil umfasst, die miteinander zusammenwirken, um die erwähnte begrenzte Fluidpassage zu bilden, wobei ein erstes Teil aus einem ersten Material mit einem ersten thermischen Ausdehnungskoeffizienten hergestellt ist und ein zweites Teil aus einem zweiten Material mit einem zweiten thermischen Ausdehnungskoeffizienten hergestellt ist, wobei der zweite thermische Ausdehnungskoeffizient größer ist als der erste thermische Ausdehnungskoeffizient, sodass der erwähnte Querschnittsbereich verkleinert wird, wenn die erwähnte Temperatur erhöht wird und umgekehrt, sodass der erwähnte Querschnittsbereich vergrößert wird, wenn die erwähnte Temperatur gesenkt wird, wobei das erste Teil durch den zylindrischen Wandabschnitt (5) gebildet ist und das zweite Teil durch den Kolben (47) gebildet ist,
**dadurch gekennzeichnet, dass** der Kolben (47) eine Basis (47a) und eine äußere Deckschicht (47b) umfasst, wobei die Basis (47a) aus einem glasfaserverstärkten Polymermaterial hergestellt ist, wobei die äußere Deckschicht (47b) den erwähnten umlaufenden Teil (45) bildet und aus einem Polymermaterial hergestellt ist, welches weniger abrasiv gegenüber dem erwähnten Metall ist, als das erwähnte glasfaserverstärkte Polymermaterial gegenüber dem erwähnten Metall ist.

2. Der Schließdämpfer nach Anspruch 1, **dadurch gekennzeichnet, dass** die erwähnte Basis (47a) glasfaserverstärktes Polyoxymethylen umfasst.

3. Der Schließdämpfer nach Anspruch 1 oder 2, **dadurch gekennzeichnet, dass** das erwähnte Metall eine Aluminiumlegierung umfasst.

4. Der Schließdämpfer nach irgendeinem der vorigen Ansprüche, **dadurch gekennzeichnet, dass** das Polymermaterial der äußeren Deckschicht (47b) nicht abrasiv ist.

5. Der Schließdämpfer nach irgendeinem der vorigen Ansprüche, **dadurch gekennzeichnet, dass** das Polymermaterial der äußeren Decksicht (47b) frei von Hartfasern ist, die insbesondere eine Mohs-Härte von über 4,0 haben.

6. Der Schließdämpfer nach irgendeinem der vorigen Ansprüche, **dadurch gekennzeichnet, dass** die äußere Deckschicht (47b) Polyoxymethylen umfasst.

7. Der Schließdämpfer nach irgendeinem der vorigen Ansprüche, **dadurch gekennzeichnet, dass** die äußere Deckschicht (47b) über die Basis (47a) übergossen ist.

8. Der Schließdämpfer nach Anspruch 7, **dadurch gekennzeichnet, dass** eine mechanische Verankerung bereitgestellt ist, um die äußere Deckschicht (47b) mit der Basis (47) zu verankern.

9. Der Schließdämpfer nach Anspruch 8, **dadurch gekennzeichnet, dass** die mechanische Verankerung eine Schwalbenschwanzverbindung und/oder einen Nut-und-Feder-Mechanismus umfasst.

10. Der Schließdämpfer nach irgendeinem der vorigen Ansprüche, **dadurch gekennzeichnet, dass** sich die erwähnte Dämpferwelle (24) durch den Kolben vom erwähnten Raum mit hohem Druck (48) zum erwähnten Raum mit niedrigem Druck (49) erstreckt und eine weitere begrenzte Fluidpassage (66) zwischen dem Raum mit hohem Druck und dem Raum mit niedrigem Druck in der erwähnten Dämpferwelle bereitgestellt ist, wobei die weitere begrenzte Fluidpassage ein verstellbares Ventil (67) umfasst.

11. Der Schließdämpfer nach irgendeinem der vorigen Ansprüche, **dadurch gekennzeichnet, dass** die äußere Deckschicht (47b) eine durchschnittliche Dicke von zwischen 1 % und 10 %, insbesondere zwischen 3 % und 6 % und noch genauer zwischen 4 % und 5 % des Durchmessers des Kolbens (47) hat.

12. Der Schließdämpfer nach irgendeinem der vorigen Ansprüche, **dadurch gekennzeichnet, dass** die äußere Deckschicht (47b) eine durchschnittliche Dicke von zwischen 0,5 mm und 6 mm, insbesondere zwischen 1 mm und 4,5 mm und noch genauer zwischen 1,2 mm und 3,5 mm hat.

13. Der Schließdämpfer nach irgendeinem der vorigen Ansprüche, **dadurch gekennzeichnet, dass** die Basis (47a) aus dem erwähnten glasfaserverstärkten Polymermaterial, bevorzugt glasfaserverstärktem Polyoxymethylen, besteht.

14. Der Schließdämpfer nach irgendeinem der vorigen Ansprüche, **dadurch gekennzeichnet, dass** die äußere Deckschicht (47b) aus dem erwähnten Polymermaterial, bevorzugt Polyoxymethylen, besteht.

15. Der Schließdämpfer nach irgendeinem der vorigen Ansprüche, **dadurch gekennzeichnet, dass** die Hydraulikflüssigkeit Silikonöl umfasst.

## Revendications

1. Amortisseur pour amortir un mouvement de fermeture d'un système de fermeture ayant un support (2) et un élément de fermeture (3) qui sont reliés de manière articulée l'un à l'autre, l'amortisseur comprenant :
- un corps cylindrique (17) ayant une direction longitudinale (18) et étant fait d'un métal ;
- une cavité cylindrique fermée formée à l'intérieur du corps cylindrique et remplie d'un volume de fluide hydraulique, la cavité cylindrique étant formée partiellement par une portion de paroi cylindrique (5) du corps cylindrique ;
- un piston (47) à l'intérieur dudit corps cylindrique de manière à diviser la cavité cylindrique fermée en un compartiment haute pression (48) et un compartiment basse pression (49), le piston pouvant coulisser par rapport au corps cylindrique entre deux positions extrêmes dans ladite direction longitudinale, la portion de paroi cylindrique (5) ayant une zone de coulissement intérieure (6) le long de laquelle le piston coulisse lorsqu'il se déplace entre ses deux positions extrêmes ;
- un arbre d'amortisseur (24) qui est monté de manière rotative sur le corps cylindrique et couplé de manière opérationnelle au piston ;
- un mécanisme de conversion de mouvement pour convertir un mouvement de rotation de l'arbre d'amortisseur en un mouvement de coulissement du piston ;
- une soupape unidirectionnelle (59) permettant l'écoulement de fluide du compartiment basse pression au compartiment haute pression lorsque ledit élément de fermeture est ouvert ;
- au moins un passage de fluide restreint entre le compartiment haute pression et le compartiment basse pression, le passage de fluide restreint étant formé par un jeu (78) entre ladite zone de coulissement (5) et une partie circonférentielle (45) du piston (47), ledit jeu ayant, à une température prédéterminée, une zone de section transversale la plus étroite prédéterminée pour déterminer une vitesse de fermeture de l'élément de fermeture ; et
- un système de compensation de température comprenant une première partie et une seconde partie qui coopèrent l'une avec l'autre pour former ledit passage de fluide restreint, une première partie étant faite d'un premier matériau ayant un premier coefficient de dilatation thermique et une seconde partie étant faite d'un second matériau ayant un second coefficient de dilatation thermique, le second coefficient de dilatation thermique étant plus grand que le premier coefficient de dilatation thermique de sorte que ladite zone de section transversale est diminuée lorsque ladite température est élevée et vice versa de sorte que ladite zone de section transversale est augmentée lorsque ladite température est abaissée, dans lequel la première partie est formée par la portion de paroi cylindrique (5) et la seconde partie est formée par le piston (47),
**caractérisé en ce que** le piston (47) comprend une base (47a) et une couche de couverture extérieure (47b), la base (47a) étant faite d'un matériau polymère renforcé par des fibres de verre, la couche de couverture extérieure (47b) formant ladite partie circonférentielle (45) et étant faite d'un matériau polymère qui est moins abrasif envers ledit métal que ledit matériau polymère renforcé par des fibres de verre ne l'est envers ledit métal.

2. Amortisseur selon la revendication 1, **caractérisé en ce que** ladite base (47a) comprend du polyoxyméthylène renforcé par des fibres de verre.

3. Amortisseur selon la revendication 1 ou 2, **caractérisé en ce que** ledit métal comprend un alliage d'aluminium.

4. Amortisseur selon l'une quelconque des revendications précédentes, **caractérisé en ce que** le matériau polymère de la couche de couverture extérieure (47b) est non abrasif.

5. Amortisseur selon l'une quelconque des revendications précédentes, **caractérisé en ce que** le matériau polymère de la couche de couverture extérieure (47b) est exempt de fibres dures qui ont notamment une dureté Mohs supérieure à 4,0.

6. Amortisseur selon l'une quelconque des revendications précédentes, **caractérisé en ce que** la couche de couverture extérieure (47b) comprend du polyoxyméthylène.

7. Amortisseur selon l'une quelconque des revendications précédentes, **caractérisé en ce que** la couche de couverture extérieure (47b) est surmoulée sur la base (47a).

8. Amortisseur selon la revendication 7, **caractérisé en ce qu'**un ancrage mécanique est prévu pour ancrer la couche de couverture extérieure (47b) à la base (47).

9. Amortisseur selon la revendication 8, **caractérisé en ce que** l'ancrage mécanique comprend un joint en queue d'aronde et/ou un mécanisme à languette et rainure.

10. Amortisseur selon l'une quelconque des revendications précédentes, **caractérisé en ce que** ledit arbre d'amortisseur (24) s'étend à travers le piston depuis ledit compartiment haute pression (48) vers ledit compartiment basse pression (49) et un autre passage de fluide restreint (66) est prévu entre le compartiment haute pression et le compartiment basse pression dans ledit arbre d'amortisseur, lequel autre passage de fluide restreint comprend une soupape réglable (67).

11. Amortisseur selon l'une quelconque des revendications précédentes, **caractérisé en ce que** la couche de couverture extérieure (47b) a une épaisseur moyenne comprise entre 1% et 10%, notamment entre 3% et 6% et plus particulièrement entre 4% et 5% du diamètre du piston (47).

12. Amortisseur selon l'une quelconque des revendications précédentes, **caractérisé en ce que** la couche de couverture extérieure (47b) présente une épaisseur moyenne comprise entre 0,5 mm et 6 mm, notamment entre 1 mm et 4,5 mm et plus particulièrement entre 1,2 mm et 3,5 mm.

13. Amortisseur selon l'une quelconque des revendications précédentes, **caractérisé en ce que** la base (47a) est constituée dudit matériau polymère renforcé par des fibres de verre, de préférence du polyoxyméthylène renforcé par des fibres de verre.

14. Amortisseur selon l'une quelconque des revendications précédentes, **caractérisé en ce que** la couche de couverture extérieure (47b) est constituée dudit matériau polymère, de préférence du polyoxyméthylène.

15. Amortisseur selon l'une quelconque des revendications précédentes, **caractérisé en ce que** le fluide hydraulique comprend de l'huile de silicone.
